(19) Europäisches Patentamt
European Patent Office
Office européen des brevets

(11) Veröffentlichungsnummer : **0 358 652 B1**

(12) **EUROPÄISCHE PATENTSCHRIFT**

(45) Veröffentlichungstag der Patentschrift : **16.10.91 Patentblatt 91/42**

(51) Int. Cl.$^5$ : **C08J 3/02,** C08L 83/08, D06M 15/643

(21) Anmeldenummer : **88903235.5**

(22) Anmeldetag : **07.04.88**

(86) Internationale Anmeldenummer : **PCT/EP88/00285**

(87) Internationale Veröffentlichungsnummer : **WO 88/08436 03.11.88 Gazette 88/24**

(54) **Wässrige, feinteilige bis optisch klare Silikon-Emulsionen.**

(30) Priorität : **24.04.87 DE 3713789**
**17.07.87 DE 3723697**

(43) Veröffentlichungstag der Anmeldung : **21.03.90 Patentblatt 90/12**

(45) Bekanntmachung des Hinweises auf die Patenterteilung : **16.10.91 Patentblatt 91/42**

(84) Benannte Vertragsstaaten : **AT BE CH DE FR GB IT LI NL SE**

(56) Entgegenhaltungen : **EP-A- 0 138 192**

(56) Entgegenhaltungen :
**EP-A- 0 143 315**
**EP-A- 0 156 970**
**US-A- 4 388 437**
**US-A- 4 496 687**
**US-A- 4 536 540**

(73) Patentinhaber : **Chemische Fabrik Pfersee GmbH**
**Rehlinger Str. 1 Postfach 1153**
**W-8901 Langweid am Lech (DE)**

(72) Erfinder : **CHROBACZEK, Harald**
**Oblatterwallstra e 40**
**W-8900 Augsburg (DE)**
Erfinder : **TSCHIDA, Günther**
**Wertachweg 15**
**W-8930 Schwabmünchen (DE)**

EP 0 358 652 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung beschreibt wäßrige, feinteilige bis optisch klare, thermisch und mechanisch stabile Silikonemulsionen auf Basis von aminoalkylsubstituierten Polysiloxanen, die Herstellung dieser Emulsionen und deren Verwendung.

Die Herstellung von Silikonemulsionen unter Hochdruckemulgierung ist seit langem bekannt (DE-C-1.060.347, US-A-3.320.197, US-A-3.748.275). Aus der EP-A-138.192 ist darüber hinaus die Herstellung von Polyorganosiloxanmikroemulsionen bekannt. Dabei werden die Ausgangssubstanzen, nämlich das ein polares Radikal enthaltende Polyorganosiloxan und das oberflächenaktive Mittel, gemischt und Wasser zur Bildung eines transluzenten Ölkonzentrates zugesetzt und danach das erhaltene Konzentrat schnell in Wasser dispergiert. Diese Herstellung von Mikroemulsionen bereitet erhebliche Schwierigkeiten hinsichtlich Typkonformität, vor allem aber weisen die erhaltenen Emulsionen nur eine ungenügende Wärmestabilität auf.

Es wurde nun gefunden, daß bei Einsatz ganz bestimmter Ausgangsverbindungen in ausgewählten Mengenverhältnissen ohne Hochdruckhomogenisierung thermisch und mechanisch unter den üblichen Bedingungen stabile, wäßrige, feinteilige bis optisch klare Silikonemulsionen entstehen, die zudem in überraschend einfacher Art und Weise durch Zusammenrühren von Silikon, Emulgator und Wasser, Erwärmen und Zugabe von Säure herstellbar sind.

Die vorliegende Erfindung beschreibt demnach in den Patentansprüche 1 bis 10 ein Verfahren zur Herstellung von wäßrigen, feinteiligen bis optisch klaren, thermisch stabilen Silikonemulsionen; die Silikondispersionen merden in Anspruche 11 und die Verwendung derselden wird in dem Patentanspruch 12 unter Schutz gestellt.

Als Verbindungen a) kommen in Wasser klar bis transparent lösliche (nachfolgend als "wasserlöslich" bezeichnet), insbesondere stickstofffreie Emulgatoren zum Einsatz. Diese Emulgatoren sind bekannt und der Fachmann wird keine Mühe haben, die richtigen Produkte auszuwählen. Als Beispiele - ohne Anspruch auf Vollständigkeit - seien folgende Emulgatoren genannt: Ethylenoxydaddukte von Fettalkoholen, insbesondere solche von primären und/oder von sekundären, linearen bis verzweigten Alkoholen mit 8 bis 16 C-Atomen und ethoxylierte $C_{8-12}$ - Alkylphenole, wobei die Anzahl der Ethylenoxydeinheiten so zu wählen ist, daß die Wasserlöslichkeit gegeben ist. Bevorzugt verwendete Verbindungen sind 2,6,8-Trimethyl-4-nonyloxyhexapolyethylenoxyethanol, Isotridecylethoxylat mit durchschnittlich 8 Ethylenoxydeinheiten, mit durchschnittlich 12 Mol Ethylenoxyd ethoxylierter sekundärer Dodecylalkohol oder n-Decylalkohol und Nonylphenolpolyglykolether mit durchschnittlich 10 Ethylenoxydeinheiten. Als Emulgatoren sind daneben aber auch gut Silikontenside, wie sie durch Eth- und/oder Propoxylierung von Polysiloxanen entstehen, geeignet, sobald die Wasserlöslichkeit gewährleistet ist. Die Alkoxylierung kann dabei seitenkettig oder endständig erfolgen und ist in der Kettenlänge von der Anzahl der - $[Si(CH_3)_2O]_n$ -Einheiten abhängig. So werden zum Beispiel bei Polysiloxanen mit n=1 bis 5 durchschnittlich 6 bis 8 Ethylenoxydeinheiten im Molekül vorhanden sein, z.B. folgendes Silikontensid:

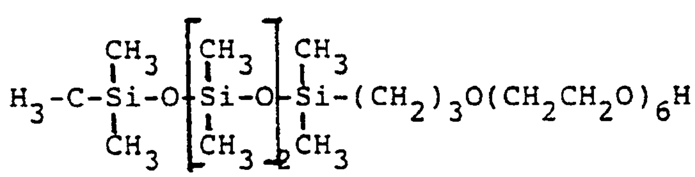

Bei den Verbindungen b) handelt es sich um aminoalkyl-substituierte Polysiloxane mit einer Aminzahl von mindestens 0,1, insbesondere mindestens 0,3, wobei ganz besonders bevorzugt solche Polysiloxane eingesetzt werden, die eine Aminzahl von 0,3 bis 1,0 besitzen. Die Aminzahl gibt dabei definitionsgemäß den Verbrauch an ln Salzsäure in Milliliter für 1 g Substanz (=Einwaage) wieder. Die Verbindungen b) können dabei zumindest teilweise auch in Form von Salzen mit den Verbindungen c) vorliegen.

Die Stellung der Aminoalkylgruppen kann sowohl endständig als auch seitenkettig sein. Die Aminoalkylgruppen weisen im allgemeinen die Formel $-RNHR^1$ auf, wobei R ein zweiwertiger Kohlenwasserstoffrest mit 2 bis 8, insbesondere 3 oder 4 C-Atomen und $R^1$ = Wasserstoff, ein Alkylrest mit 1 bis 4 C-Atomen oder den Rest $-CH_2CH_2NH_2$ darstellt.
Bevorzugt hat das aminofunktionelle Radikal folgenden Aufbau:
$-CH_2CH_2CH_2-NH-CH_2-CH_2-NH_2$ oder
$-CH_2-CH(CH_3)CH_2-NH-CH_2-CH_2-NH_2$.

Neben den zwangsweise vorhandenen Aminoalkylgruppen bestehen hinsichtlich des Aufbaus der verwendbaren Polysiloxane keine besonderen Einschränkungen. So können gerad- und/oder verzweigtkettige,

mit Aminoalkylgruppen substituierte Polysiloxane, insbesondere Dimethylpolysiloxane, die auch endständige OH-Gruppen oder seitenkettige Kohlenwasserstoff- bzw. substituierte Kohlenwasserstoffreste, insbesondere Vinylund/oder Phenylreste, enthalten, verwendet werden. Aus diesen Darlegungen ist ohne weiteres erkennbar, daß auch durch weitere Modifizierung von aminoalkylsubstituierten Polysiloxanen ohne weiteres einsetzbare Verbindungen b) erhalten werden, so lange durch Wahl des Umsetzungsverhältnisses die geforderte Mindestaminzahl gewährleistet ist. Die einsetzbaren aminofunktionellen Polysiloxane sind im allgemeinen bekannt und bedürfen daher keiner weiteren Erläuterung mehr.

Auch die Verbindungen c) sind der Fachwelt geläufig. Als Beispiele für Säuren seien Hypophosphorige Säure, Salpeter- und Salzsäure, insbesondere aber niedermolekulare, organische Säuren wie Milch-, Glykol-, Propion-, Ameisen- und aus wirtschaftlichen Gründen vor allem Essigsäure genannt.

Bei den Verbindungen d) handelt es sich um normales Leitungswasser. Es ist aber auch möglich, mit destilliertem bzw. entmineralisiertem Wasser zu arbeiten, wobei hier bei höheren Konzentrationen an Verbindung b) vorteilhaft zur kontinuierlichen Herstellung der fertigen Emulsionen übergegangen wird, da hiernach etwas feinteiligere Emulsionen resultieren.

Entscheidend bei den erfindungsgemäßen Silikonemulsionen sind nicht nur die eingesetzten Verbindungen, sondern vor allem auch die Mengenverhältnisse der einzelnen Verbindungen zueinander. So ist es unbedingt notwendig, daß die erfindungsgemäßen, thermisch und mechanisch stabilen Silikonemulsionen, bezogen auf die gesamte Emulsion, 3 bis 25 Gew.% Verbindung a), 0,1 bis 84 Gew.% Verbindung b), bis zu 3 Gew.% Verbindung c) und mindestens 5 Gew.% Wasser enthalten, da nur bei Einhaltung dieser Mengenverhältnisse unter Spontanemulgierung die gewünschten Silikonemulsionen entstehen. Ein besonders sicheres Arbeiten wird dabei gewährleistet, wenn die Silikonemulsionen von der Verbindung a) 8 bis 12 Gew.%, von der Verbindung c) bis zu 1 Gew.% und 5 bis 70 Gew.% Verbindung d) enthält, wobei es sich bei der Verbindung d) im Normalfall um übliches Leitungswasser handelt. Die Summe aus den Verbindungen a), b), c) und d) beträgt selbstverständlich 100 Gew.%.

Um aber zu den gewünschten Silikonemulsionen zu gelangen, ist zusätzlich unbedingt darauf zu achten, daß das Verhältnis Emulgator zu Silikon (unter dem Begriff Silikon sind hier sowohl die Verbindungen b) wie auch die Summe aus den Verbindungen b) und e) zu verstehen), mindestens 1,2 zu 10 beträgt.

Wird die Herstellung von Öl-in-Wasser-Emulsionen angestrebt, so ist die Menge an Verbindung b) auf maximal 70 Gew.%, vor allem 5 bis 70 Gew.% zu beschränken. Ganz besonders bevorzugt sind die erfindungsgemäßen optisch klaren Silikonemulsionen (=Mikroemulsionen). Diese Emulsionen enthalten bis zu 70 Gew.%, insbesondere bis zu 18 Gew.%, besonders bevorzugt 12 bis 18 Gew.% an Verbindungen b). Besonders kritisch ist die Säuremenge in diesen optisch klaren Silikonemülsionen. Die üblichen, etwa 15 bis 40 %igen Emulsionen an Verbindung b) (mit den Verbindungen e) werden derartige Emulsionen nicht mehr erhalten) enthalten bis zu 0,6 Gew.%, insbesondere 0,25 bis 0,6 Gew.% an reiner, 100 %iger Säure, bei höherkonzentrierten Silikonemulsionen können die Mengen geringfügig ansteigen (bis ca. 1 Gew.%).

Überraschenderweise liegen auch sehr feinteilige Silikonemulsionen dann vor, wenn bis zu 70 Gew.% der Verbindung b) gegen andere aminogruppenfreie Polysiloxane (Verbindung e) ausgetauscht werden. Als Verbindungen e) kommen dabei mehr oder weniger alle Polysiloxane mit anderer Funktionalität in Betracht. Beispielhaft seien aufgeführt:
α,ω -Diepoxy-,α,ω -Dialkoxydimethylpolysiloxan, Dimethylpolysiloxane mit Vinyl-, Acrylat- und Phenoxyalkylfunktionalität, aber auch α,ω -Dicarbinol- und amidfunktionelle Organopolysiloxane. Diese Silikonemulsionen sind gegenüber den Emulsionen der Verbindungen b) allein in geringerem Maße thermisch stabil (bis ca. 70°C).

Zur Herstellung der Silikonemulsionen werden die Verbindungen a), b) und d) vorgelegt und unter Rühren auf mindestens 50°C erwärmt. Es ist aber auch möglich, nur die Verbindungen a) und d) vorzulegen, zu erwärmen und erst dann die Verbindung b) unter Rühren zuzusetzen wobei grundsätzlich bevorzugt die Verbindung b) in salzfreier Form eingesetzt wird und bis zu 70 Gew.% gegen die Verbindung e) ausgetauscht sein kann. Die Temperatur ist nach oben nur durch den Druckanstieg begrenzt und man wird bevorzugt nicht höher als bis zu 120°C erwärmen, wobei dann selbstverständlich in einem geschlossenen System gearbeitet werden muß. Besonders günstig ist ein Temperaturbereich von 60 bis 95°C, da in diesem Bereich die gesamte Herstellung hinreichend schnell verläuft und drucklos gearbeitet werden kann. Die gleichmäßige Verteilung nimmt nur relativ kurze Zeit in Anspruch, im allgemeinen sind 1 bis 10, meist schon 1 bis 5 Minuten vollkommen ausreichend. Sobald eine einheitliche Mischung entstanden ist, wird die Verbindung c) bei der Arbeitstemperatur eingerührt, wodurch sich momentan eine homogene Phase bildet, d.h. die gewünschte Silikonemulsion hat sich unter Spontanemulgierung gebildet. Durch die Zugabe der Verbindung c) wird ein pH-Wert von 3,0 bis 7,0, insbesondere 5,0 bis 7,0 eingestellt. Die dazu benötigten Mengen liegen unter Berücksichtigung der gleichzeitigen Salzbildung der Verbindungen b) bei 0,05 bis 3,05, insbesondere bei 0,1 bis 1,1, besonders bevorzugt zur Erzielung von echten Mikroemulsionen bei 0,3 bis 0,7 Gewichtsteilen an Verbindung c) (bezogen auf 100 %ige Säure). Die Mengen der Verbindungen a), b) und d) liegen entsprechend den Mengen der fertigen Silikonemulsionen bei 3 bis 25, insbesondere 8 bis 12 Gewichtsteilen Verbindung a), 0,1 bis 84, insbesondere 5 bis 70, besonders bevorzugt 12 bis 18 Gewichtsteilen Verbindung b) und 5 bis 96,85, vor allem 5 bis 70, insbesondere 21,1 bis 91,8, besonders bevorzugt 57 bis 79,9 Gewichtsteilen Verbindung d), wobei die Summe aus den Verbindungen a), b) und d) und der zur pH-Einstellung verwendeten Menge der Verbindung c) 100 Gewichtsteile beträgt.

Es ist aber auch möglich, die gesamte Menge an Verbindung c) von vornherein mit vorzulegen, d.h. die Verbindung b) in Salzform zur Herstellung der. Emulsionen heranzuziehen. Diese Arbeitsweise ist ebenfalls ohne weiteres möglich, doch wird in diesem Fall zur Erzielung der Spontanemulgierung bei der höheren Temperatur ein längerer Zeitraum benötigt.

Aus Stabilitätsgründen ist darauf zu achten, daß nach der Herstellung gegebenenfalls noch Säure zugesetzt wird, so daß gewährleistet bleibt, daß während der Lagerung der pH-Wert nicht über 7 ansteigt. Auch kann aus Stabilitätsgründen der Zusatz eines handelsüblichen Biozids durchaus vorteilhaft sein. In beiden Fällen sollte der Zusatz bei unter 40°C erfolgen.

Es konnte nach dem Stand der Technik nicht erwartet werden, daß bei Verwendung der ausgewählten Verbindungen in den ausgewählten Mengenverhältnissen unter den beschriebenen Verfahrensbedingungen unter Spontanemulgierung feinteilige bis optisch klare Silikonemulsionen erhalten werden, wobei es besonders überraschend ist, daß es auf so einfache Weise gelingt, wasserklare Silikonemulsionen auch hoher Konzentration herzustellen. Diese Emulsionen weisen eine ausgezeichnete Transparenz auf und sind ebenso wie die feinteiligen Silikonemulsionen thermisch stabil.

Die Transparenz läßt sich dabei einfach mit dem Lange-Trübungsphotometer LTP 5 bestimmen, wobei die Trübungseinheiten nach Formazinstandard (TE/F) eine Aussage über die Emulsionsqualität erlauben (Wert für Wasser ca. 0,25). Wichtig und entscheidend ist dabei aber die Tatsache, daß die erfindungsgemäßen Emulsionen, solange sie optisch klar sind, eine sehr große thermische Stabilität aufweisen, eine Eigenschaft, die nach dem Stand der Technik bisher noch nicht zufriedenstellend erhalten wurde. Aber selbst, sofern feinteilige Emulsionen entstehen, sind dieselben noch sehr gut thermisch beständig (mindestens bis 70°C). Die erfindungsgemäß hergestellten Emulsionen besitzen außerdem auch eine hohe mechanische Beständigkeit, vor allem gegenüber Schütteln und Scheren.

Die erfindungsgemäßen Silikonemulsionen (aus verarbeitungstechnischen Gründen werden dieselben meist auf 15 bis 40 Gew.% Silikon eingestellt), können nach den üblichen Methoden als solche zur Textilausrüstung verwendet werden, und zwar insbesondere nach dem Auszieh- und Foulardverfahren. Dabei ist es aber auch ohne weiteres möglich, dieselben mit anderen bekannten Textilhilfsmitteln - auch in der Wärme im Rahmen der Herstellung - zu kombinieren, wobei durch die erfindungsgemäßen Mittel besonders der Griff günstig beeinflußt wird. Die damit in üblicher Weise behandelten Textilien zeichnen sich nämlich durch einen besonders oberflächenglatten, fließenden Weichgriff aus.

Als solche Zusätze kommen handelsübliche Antistatika, Appreturmittel, Kunstharze, Oleophobierungs- und Hydrophobierungsmittel und dazugehörige Katalysatoren in Frage.

Die Erfindung wird nun anhand der nachfolgenden Beispiele näher erläutert, wobei Teile = Gewichtsteile und %-Angaben = Gewichts% bedeuten.

Beispiele 1 bis 4

Die unten genannten Verbindungen a), b) und d) werden, wie angegeben, miteinander gemischt, auf 80°C erwärmt und durch Rühren bei dieser Temperatur innerhalb von 2 bis 3 Minuten gleichmäßig verteilt. Anschließend wird bei der genannten Temperatur die angegebene Menge Essigsäure zugesetzt und es erfolgt unmittelbar Spontanemulgierung, d.h. die Mischungen werden sofort klar. Nun läßt man auf Raumtemperatur abkühlen. Zur Bestimmung der Trübung werden anschließend die erhaltenen Mikroemulsionen mit dem Lange-Trübungsphotometer in Substanz gemessen.

Die angegebenen Mengen sind Gewichtsteile.

| | Beispiel 1 | Beispiel 2 | Beispiel 3 | Beispiel 4 |
|---|---|---|---|---|
| Wasser (Verbindung d) | 74,6 | 74,6 | 74,6 | 74,6 |
| Verbindung a1) | | | 10 | 10 |
| Verbindung a2) | 10 | | | |
| Verbindung a3) | | 10 | | |
| Verbindung b1) | 15 | | | |
| Verbindung b2) | | 15 | | |
| Verbindung b3) | | | 15 | |
| Verbindung b4) | | | | 15 |
| Eisessig | 0,4 | 0,4 | 0,4 | 0,4 |
| pH-Wert | 5,5 | 5,5 | 5,5 | 5,5 |
| TE/F (Trübungseinheiten, Formazin) | 6 | 6 | 8 | 50 |
| Aussehen | wasserklar | wasserklar | wasserklar | ganz leicht blaustichig |
| Thermische Stabilität (geprüft bei 95°C während 2 Std.) | + | + | + | + |

+ = thermisch stabil

\- = thermisch instabil

a1) = $C_{11-15}$ sek. Alkoholethoxylat mit durchschnittlich 7 Ethylenoxydeinheiten,

a2) = 2,6,8-Trimethyl-4-nonyloxypolyethylenoxyethanol (®TERGITOL TMN-6 der Union Carbide Europe SA),

a3) = Isotridecylethoxylat mit durchschnittlich 8 Ethylenoxydeinheiten,

b1) = lineares, trimethylsilylendblockiertes Dimethylpolysiloxan mit $-(CH_2)_3-NH-CH_2-CH_2-NH_2-$Seitenketten (Viskosität bei 20°C ca. 1000 mPa.s; Aminzahl 0,62),

b2) = lineares, OH-endblockiertes Dimethylpolysiloxan mit $-(CH_2)_3-NH-CH_2-CH_2-NH_2-$Seitenketten (Viskosität bei 20°C ca. 1900 mPa.s; Aminzahl 0,58)

b3) =

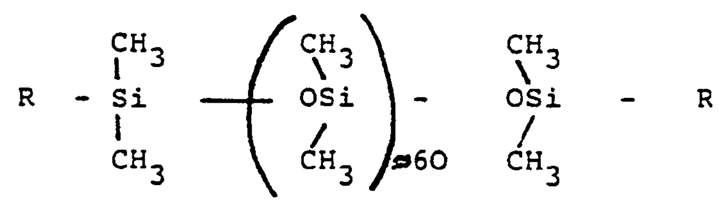

R = $-(CH_2)_3-NH-CH_2-CH_2-NH_2$ und

b4) = verzweigtkettiges, OH-endblockiertes Dimethylpolysiloxan mit $-(CH_2)_3-NH-CH_2-CH_2-NH_2-$Seiten- und -Endketten (Viskosität bei 20°C ca. 1050 mPa.s; Aminzahl 0,3).

Wird in gleicher Weise wie im Beispiel 1 mit 0,4 Teilen konzentrierter Salpetersäure gearbeitet, so wird eine blaustichige Emulsion erhalten (TE/F 80).

Beispiel 5

Wird das Beispiel 1 unter Verwendung der gleichen Menge des bei der Besprechung der Emulgatoren

genannten Silikontensids wiederholt, so wird eine leicht blaustichige, thermisch äußerst stabile Mikroemulsion erhalten, die gegenüber Scherbeanspruchung unempfindlich ist.

Beispiel 6

8 Teile der in Beispiel 1 beschriebenen Verbindung a2) werden unter Erwärmen auf 70°C unter Rühren mit 16 Teilen eines aminofunktionellen Polysiloxans (lineares, OH-endblockiertes Dimethylpolysiloxan mit -$(CH_2)_3$-NH-$CH_2$-$CH_2$-$NH_2$-Seitenketten; Viskosität bei 20°C ca. 5000 bis 6000 mPa.s; Aminzahl 0,12) und 74 Teilen Wasser homogen verrührt. Anschließend wird bei der genannten Temperatur 1 Teil Milchsäure zuge-: setzt und unter Klarwerden entsteht spontan die Mikroemulsion. Nach dem Abkühlen erhält man eine klare, thermisch äußerst beständige Emulsion, die sehr gut zum Weichmachen von Textilien geeignet ist.

Beispiel 7

Das Beispiel 2 wird unter Verwendung von 20 Teilen Nonylphenolpolyglykolether (mit 9 Ethylenoxydeinheiten je Mol Nonylphenol) und 64 Teilen Wasser wiederholt. Es wird eine ebenfalls wasserklare Mikroemulsion erhalten, die sowohl kälte- als auch hervorragend wärmebeständig ist und auch nach 2-stündigem Schütteln keine Veränderung zeigt.

Beispiel 8

Das Beispiel 1 wird in der Weise wiederholt, daß zu der Verbindung b 1) von vorneherein 0,05 Teile Eisessig gegeben werden und wie dort beschrieben, gearbeitet wird. Es wird nach Zugabe des restlichen Eisessigs und kurzem Nachrühren eine gleich gute Emulsion erhalten.

Beispiel 9

Das Beispiel 1 wird bei 95°C (Rührzeit 5 bis 6 Minuten) wiederholt mit 25 Teilen von folgendem aminoalkylsubstituierten Polysiloxan und entsprechend reduzierter Wassermenge: stark verzweigtes, trimethylendblockiertes Dimethylpolysiloxan (Aminzahl ca. 0,6; Viskosität bei 20°C ca. 1200 mPa.s).

Beispiele 10 bis 14

Die nachfolgend genannten Verbindungen a), b), d) und e) werden in der angegebenen Weise gemischt, auf 70 bis 80°C erwärmt und durch Rühren bei dieser Temperatur innerhalb weniger Minuten (je nach Viskosität der Verbindungen b) und e) 2 bis 6 Minuten) gleichmäßig verteilt. Anschließend wird durch Zugabe der Verbindung c) spontan die fertige Emulsion hergestellt. Man läßt danach auf Zimmertemperatur abkühlen.

| Beispiele: | 10 | 11 | 12 | 13 | 14 |
|---|---|---|---|---|---|
| Wasser Verbindung d) | 48,4 | 9 | 64,6 | 34,8 | 52,7 |
| Verbindung a 1) | - | 10 | 10 | - | - |
| Verbindung a 2) | - | - | - | 10 | 10 |
| Verbindung a 4) | 10 | - | - | - | - |
| Verbindung b 1) | 40 | - | 15 | 25 | 12 |
| Verbindung b 5) | - | 80 | - | - | - |
| Eisessig | - | - | 0,4 | 0,2 | 0,3 |
| Salzsäure konz. | 1,6 | - | - | - | - |
| Glykolsäure 57%ig (= Verbindungen c) | - | 1 | - | - | - |
| Verbindung e 1) | - | - | - | - | 25 |
| Verbindung e 2) | - | - | - | 30 | - |
| Verbindung e 3) | - | - | 10 | - | - |
| pH-Wert | 6,6 | 6,7 | 6,5 | 6,8 | 6,6 |
| Aussehen | wasserklar | wasserklar | feinteilig | feinteilig | feinteilig |
| Thermische Stabilität (2 Std. bei 60°C) | + | + | + | + | + |

a 4) = n-Dodecylethoxylat mit durchschnittlich 6 Ethylenoxydeinheiten

b 5) = wie das im Beispiel 6 beschriebene Polysiloxan mit einer Viskosität bei 20°C von ca. 750 mPa.s und einer Aminzahl von etwa 0,6

e 1) =

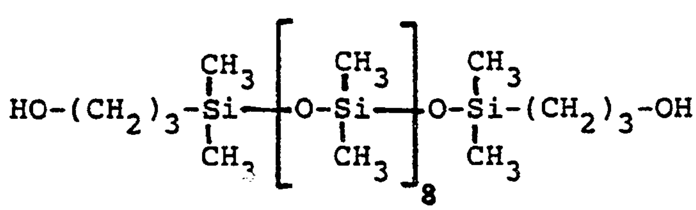

e 2) = 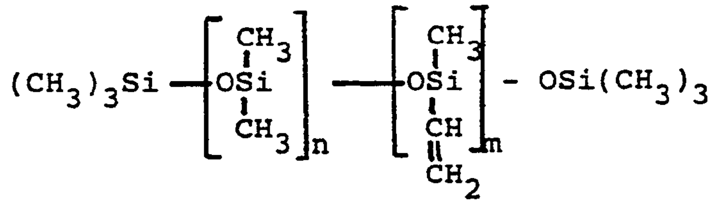

Viskosität bei 20°C ca. 40 mPa.s; Jodzahl ca. 66.

e 3) = Aufbau wie e 2) mit Seitenkette 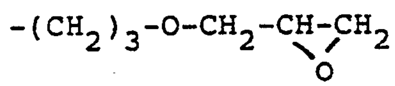 statt der Vinylgruppe

Viskosität bei 20°C ca. 50 mPa.s; Epoxizahl ca. 0,2.

Beispiel 15

| | |
|---|---|
| Es werden 72,91 | Teile entmineralisiertes Wasser, |
| 6,66 | Teile Emulgator (siehe Beispiel 2, Verbindung a 3), |
| 20,00 | Teile eines aminofunktionellen Polysiloxans (verzweigtes, OH-endblockiertes Dimethylpolysiloxan; Viskosität bei 20°C ca. 1050 mPa.s; Aminzahl 0,30) und |
| 0,43 | Teile 60%ige Essigsäure auf ca. 80°C unter Rühren erwärmt. Nach etwa 30 Minuten bei dieser Temperatur ist unter langsamem Klarwerden die Mikroemulsion entstanden. Nun wird kaltgerührt. Es entsteht eine thermisch beständige Silikonemulsion. |

Anwendungsbeispiel 1

a) Foulardverfahren Eine Baumwollmaschenware (200 g/m²) wird mit einer Flotte, die 30 g/l der nach Beispiel 1 hergestellten Emulsion enthält (Flotten-pH-Wert 5,5) foulardiert, auf ca. 90% Flottenaufnahme abgequetscht und bei 110°C während 10 Minuten getrocknet.
Es resuliert ein extrem oberflächenglatter, spezifisch weicher, fließender Griff, wobei die Ware zusätzlich durch hohe Sprungelastizität und eine erhebliche Steigerung der Entknitterungseigenschaften ausgezeichnet ist.

b) Ausziehverfahren Die im Beispiel 1 beschriebene Mikroemulsion wird zur Ausrüstung der gleichen Baumwollmaschenware in der Weise verwendet, daß dieselbe in eine Arbeitsflotte eingetaucht (Flottenverhältnis 1 : 20), 20 Minuten bei 20°C verweilen gelassen und dann wie oben beschrieben, getrocknet wird. Auf diese Weise werden durch ca. 85%iges Ausziehen der Flotte 0,4 Gew.% Wirksubstanz auf die Ware aufgebracht. Es werden entsprechende Ausrüstungseffekte erhalten.

Anwendungsbeispiel 2

Der Emulsion nach Beispiel 12 können zur Abrundung des Effektes je 10 bis 30 g nachfolgend genannter Ausrüstungsmittel zugesetzt werden:

(1) ca. 70%ige wäßrige Lösung von mit Methanol verethertem Dimethyloldihydroxyethylenharnstoff,

(2) ca. 42%ige nichtionogene Polyvinylacetatdispersion oder

(3) ca. 52%ige nichtionogene Wasserstoffmethylpolysiloxandispersion.

Mit diesen Kombinationsprodukten können übliche Textilmaterialien, z.B. auch Baumwollpopeline, Baumwoll/Synthetikmischgewebe oder Regeneratcellulose, in bekannter Weise hervorragende Gesamteigenschaften verliehen werden.

## Patentansprüche

1. Verfahren zur Herstellung von feinteiligen bis optisch klaren, thermisch und mechanisch stabilen Silikonemulsionen enthaltend a) Emulgatoren, b) aminoalkylsubstituierte Polysiloxane, c) Säuren und d) Wasser, dadurch gekennzeichnet, daß eine Silikonemulsion hergestellt wird, die aus einer Mischung aus 3 bis 25, insbesondere 8 bis 12 Gewichtsteilen eines in Wasser klar bis transparent löslichen Emulgators (Verbindung a), 0,1 bis 84 Gewichtsteilen mindestens eines aminoalkylsubstituierten Polysiloxans mit einer Aminzahl von mindestens 0,1, insbesondere 0,3 (Verbindung b),
0,05 bis 3,05, insbesondere 0, 10 bis 1,1, besonders bevorzugt 0,3 bis 0,7 Gewichtsteilen einer Säure, Insbesondere einer niedermolekularen organischen Säure (bezogen auf 100 %ige Säure) (Verbindung c)
und 5 bis 96,85 Gewichtsteilen Wasser (Verbindung d)
besteht, wobei die Summe der Mengen an Verbindungen a), b) und d) und der zur pH-Einstellung verwendeten Menge der Verbindung c) 100 Gew.-teile ergibt, mit der Maßgabe, daß das Verhältnis Emulgator zu Silikon mindestens 1,2 zu 10 beträgt, Indem eine Mischung, die mindestens die Verbindungen a) und d) enthält, unter Rühren auf mindestens 50°C bis zur Bildung einer homogenen Phase erwärmt und gegebenenfalls abgekühlt wird und wobei ein pH-Wert von 3,0 bis 7,0 durch Zugabe der Verbindung c) vor oder nach dem Erwärmen eingestellt wird,

2. Verfahren nach Patentanspruch 1, dadurch gekennzeichnet, daß die Mischung aus den Verbindungen a), b) und d) auf mindestens 50°C erwärmt und dann erst die Verbindung c) zugefügt wird.

3. Verfahren nach Patentanspruch 1, dadurch gekennzeichnet, daß die Mischung aus den Verbindungen a) und d) auf mindestens 50°C erwärmt und dann erst die Verbindungen b) und c) zugefügt werden.

4. Verfahren nach mindestens einem der Patentansprüche 1 bis 3, dadurch gekennzeichnet, daß die Verbindung b) in Mengen von 5 bis 70, insbesondere 12 bis 18 Gewichtsteilen eingesetzt wird.

5. Verfahren nach mindestens einem der Patentansprüche 1 bis 4, dadurch gekennzeichnet, daß als Verbindungen b) gerad- oder verzweigtkettige, aminoalkylsubstituierte Polysiloxane mit einer Animzahl von mindestens 0,1, insbesondere 0,3 bis 1,0, wobei die $NH_2$-Gruppen in $\alpha,\omega$ bzw. Seitenstellung stehen, eingesetzt werden.

6. Verfahren nach mindestens einem der Patentansprüche 1 bis 5, dadurch gekennzeichnet, daß als Verbindungen a) primäre und/oder sekundäre, lineare bzw.verzweigte $C_8$ bis $C_{16}$-Alkylpolyglykolether und/oder $C_8$ bis $C_{12}$-alkylphenolethoxylate eingesetzt wurden.

7. Verfahren nach mindestens einem der Patentansprüche 1 bis 6, dadurch gekennzeichnet, daß bis zu 70 Gew.% der Verbindung b) gegen aminoguppenfreie Polysiloxane (Verbindung e) ausgetauscht werden.

8. Verfahren nach mindestens einem der Patentansprüche 1 bis 7, dadurch gekennzeichnet, daß das Verfahren bei einer Temperatur von 50 bis 120°C und gegebenenfalls unter geringem Druck durchgeführt wird.

9. Verfahren nach mindestens einem der Patentansprüche 1 bis 8, dadurch gekennzeichnet, daß das Verfahren bei einer Temperatur von 60 bis 95°C durchgefürhrt wird.

10. Verfahren nach mindestens einem der Patentansprüche 1 bis 9, dadurch gekennzeichnet, daß die Menge der Verbindung c) so gewählt wird, daß die fertige Emulsion einen pH-Wert von 5,0 bis 7,0 aufweist.

11. Die nach einem oder mehreren Patentansprüchen der Patentansprüche 1 bis 10 hergestellten Silikondispersionen.

12. Vewendung der Silikonemulsionen nach Patentanspruch 11 als solche oder nach Zusatz weiterer bekannter Textilhilfsmittel zur Textilausrütung in üblicher Weise.

## Claims

1. Process for manufacturing finely-divided to optically clear thermally and mechanically stable silicone emulsions containing a) emulsifiers, b) aminoalkyl-substituted polysiloxanes, c) acids and d) water, characterised in that a silicone emulsion is produced which consists of a mixture of 3 to 25, preferably 8 to 12, parts by weight of an emulsifier soluble in water yielding a clear to transparent aqueous solution (constituent a),
0.1 to 84 ports by weight of at least one aminoalkyl-substituted polysiloxane with an amine number of at least 0.1, and preferably 0.3 (constituent b),
0.05 to 3.05, especially 0.10 to 1.1, and preferably 0.3 to 0.7, ports by weight of an acid, preferably a low molecular weight organic acid (based on 100% strength acid) (constituent c),
and 5 to 96.85 parts by weight of water (constituent d),
whereby the sum of the amounts of constituents a), b) and d) and of the amount of constituent c) used for pH-value adjustment, totals 100 parts by weight, whereby the ratio of emulsifier to siloxane is at least 1.2 to 10, wherein a mixture containing at least the constituents a) and d), is heated to a temperature of at least 50°C

with stirring, until a homogeneous phase has been formed and is then cooled if need be, and wherein a pH-value of 3.0 to 7.0 is established by adding constituent c) before or after heating.

2. Process according to Claim 1, characterised in that the mixture consisting of the constituents a), b) and d) is heated to a temperature of at least 50°C, and only then is constituent c) added.

3. Process according to Claim 1, characterised in that the mixture of constituents a) and d) is heated to at least 50°C, and only then are constituents b) and c) added.

4. Process according to at least one of Claims 1 to 3, characterised in that constituent b) is used in an amount of 5 to 70, preferably 12 to 18, ports by weight.

5. Process according to at least one of Claims 1 to 4, characterised in that as constituent b) straight-chain or branched-chain aminoalkyl-substituted polysiloxanes with an amine number of at least 0.1, preferably 0.3 to 1.0, in which the $NH_2$ groups are in the α, ω or in side-chain position, are used.

6. Process according to at least one of Claims 1 to 5, characterised in that as constituent a) primary and/or secondary, linear or branched $C_8$ to $C_{16}$ alkylpolyglycolethers and/or $C_6$ to $C_{12}$ alkylphenolethoxylates are used.

7. Process according to at least one of claims 1 to 6, characterised in that up to 70% of the weight of constituent b) is replaced by amino-group-free polysiloxanes (constituent e).

8. Process according to at least one of Claims 1 to 7, characterised in that the process is carried out at a temperature of 50 to 120°C and, if need be, under slightly elevated pressure.

9. Process according to at least one of Claims 1 to 8, characterised in that the process is carried out at a temperature of 60 to 95°C.

10. Process according to at least one of Claims 1 to 9, characterised in that the amount of constituent c) is chosen such that the prepared emulsion has a pH-value of 5.0 to 7.0.

11. The silicon dispersions produced according to any one or more of Claims 1 to 10.

12. The use of the silicone emulsions according to Claim 11 as such, or after the addition of other well-known textile aids, for treating textiles in the usual way.

## Revendications

1. Procédé de production d'émulsions de silicones à particules fines jusqu'à des émulsions optiquement claires ou limpides , contenant a) des émulsifiants , b) des polysiloxanes à substituant(s) amminoalkyle(s), c) des acides et d) de l'eau , caractérisé en ce qu'on produit une émulsion de silicone, qui consiste en un mélange de 3 à 25 ,notamment 8 à 12 parties en poids d'un émulsifiant soluble dans l'eau en donnant une solution claire à transparente (composé a), 0,1 à 84 parties en poids d'au moins un polysiloxane à substituant(s) aminoalkyle(s), ayant un indice d'amine d'au moins 0,1 , notamment 0,3 ( composé b) ,
0,05 à 3,05 , notamment 0,10 à 1,1 ,de façon particulièrement préférée 0,3 à 0,7 parties en poids d'un acide , en particulier un acide organique à bas poids moléculaire ( par rapport à de l'acide à 100 %) (composé c), et 5 à 96,85 parties en poids d'eau (compose d),
la somme des quantités des composés a), b) et d) et de la quantité du compose c) utilisée pour ajuster le pH donnant 100 parties en poids , à la condition que le rapport de l'émulsifiant à la silicone vale au moins 1,2 pour 10 , en chauffant un mélange , contenant au moins les composés a) et d), sous agitation à 50°C au moins jusqu'à formation d'une phase homogène et en refroidisant eventuellement le mélange , et en ajustant le pH à une valeur de 3,0 à 7,0 par addition du composé c),avant ou après le chauffage .

2. Procédé selon la revendication 1 , caractérisé en ce qu'on chauffe le mélange des composés a), b) et c) à 50°C au moins et l'on n'ajoute qu'ensuite seulement le compose c) .

3. Procédé selon la revendication 1 , caractérisé en ce qu'on chauffe le mélange des composes a) et d) à 50 °C au moins et l'on n'introduit qu'ensuite seulement les composes b) et c) .

4. Procédé selon l'une au moins des revendications 1 à 3 , caractérisé en ce qu'on introduit le composé b) en des quantités de 5 à 70, notamment 12 à 18 , parties en poids .

5. Procédé selon l'une au moins des revendications 1 à 4 , caractérisé en ce qu"on utilise comme composés b) des polysiloxanes à substituant(s) aminoalkyle, à chaine droite ou ramifiée,ayant un indice d'amined' au moins 0,1 , en particulier de 0,3 à 1,0 , les groupes $NH_2$ étant en position α, ω ou en position latérale .

6. Procédé selon l'une au moins des revendications 1 à 5 , caractérisé en ce qu'on a utilise comme composés a) des éthers polyglycoliques d'alkyles en $C_8$ à $C_{16}$ , linéaires ou ramifies, primaires ou secondaires et/ou des éthoxylates d'alkyl ( à $C_6$ à $C_{12}$) phénol.

7. Procédé selon l'une au moins des revendications 1 à 6 , caractérisé en ce que jusqu'à 70 % en poids du composé b) sont échangés contre des polysiloxanes sans groupes amino ( composé e).

8. Procédé selon l'une au moins des revendications 1 à 7 , caractérisé en ce qu'on réalise le procédé à une température de 50 à 120°C et éventuellement sous faible pression .

9. Procédé selon l"une au moins des revendications 1 à 8 , caractérisé en ce qu'on réalise le procédé à une température de 60 à 95°C.

10. Procédé selon l'une au moins des revendications 1 à 9 , caractérisé en ce qu'on choisit la quantité du composé c) de façon que l'émulsion terminée présente un pH de 5,0 à 7,0 .

11. Dispersions de silicone(s) produites selon une ou plusieurs des revendications 1 à 10 .

12. Utilisation des émulsions de silicones selon la revendication 11 , telles quelles ou après addition adjuvants textiles connus pour finir et apprêter de façon habituelle les textiles.